# EUROPEAN PATENT APPLICATION

(11) **EP 2 068 113 A1**
(43) Date of publication of application: **10.06.2009**
(21) Application number: 08020886.1
(22) Date of filing: 02.12.2008
(51) Int. Cl.: G01B 11/00, G01B 21/04

(54) **Calibrating method of image measuring instrument**

(30) Priority: 04.12.2007 JP 2007313538
(71) Applicant: Mitutoyo Corporation, Takatsu ku Kawasaki-shi Kanagawa-ken 213-8533 (JP)
(72) Inventor: Arai, Masanori, Kawasaki-shi Kanagawa 213-8533 (JP)
(74) Representative: Altenburg, Udo

(57) **Abstract**

An image measuring instrument includes: a CCD camera (3) having an objective lens (31); an orientation changer (45) that changes an imaging direction; a movement mechanism (4) that relatively moves the CCD camera (3) and a workpiece for auto-focusing the objective lens (31); and a position detector (5) for detecting a position of the CCD camera (3). A calibration method includes: a preparation step (S1) for preparing a reference gauge (10) having a sphere (13) of which radius is sized not more than a focus depth (DF) of the objective lens (31), a surface of the sphere defining a reference surface (14); an orientation-changing step (S2) for changing the imaging direction; a focus-adjusting step (S3) for focusing the objective lens (31) on the reference surface (14) using the auto-focusing of the movement mechanism (4); and a position-detecting step (S4) for detecting the position information of the imaging unit (3) by the position detector (5), thereby calibrating the position of the CCD camera (3).

## Description

### BACKGROUND OF THE INVENTION

### 1. FIELD OF THE INVENTION

The present invention relates to a calibrating method of an image measuring instrument, more specifically, a calibrating method of an image measuring instrument that measures a surface texture of a workpiece in a non-contact manner according to an image signal and position information.

### 2. DESCRIPTION OF RELATED ART

Traditionally, an image measuring instrument that measures a shape and a dimension of an object to be measured based on image data obtained by capturing the object has been used.

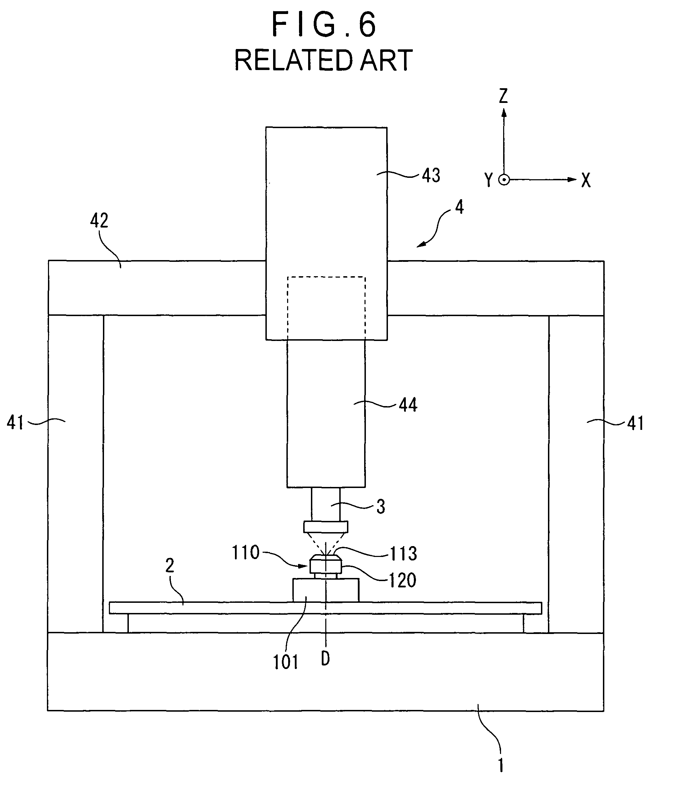

Fig. 6 shows a front elevational view of an overall traditional image measuring instrument.

The image measuring instrument includes: a platform 1 as a base; a table 2 on which a workpiece is mounted, the table 2 being supported on the platform 1 in a manner movable in front and rear directions; a CCD camera 3 (imaging unit) for imaging the workpiece; and a movement mechanism 4 for relatively moving the CCD camera 3 and the workpiece.

In Fig. 6, the width direction of the table 2 (right and left directions in the figure) is defined as an X-axis, the movement direction of the table 2 is defined as a Y-axis and a direction orthogonal to a top side of the table 2 is defined as a Z-axis for the explanations below.

The movement mechanism 4 includes: a beam support 41 erected on both sides of the platform 1; an X-beam 42 supported on the upper end of the beam support 41; an X-slider 43 slidably provided on the X-beam 42; and a Z-slider 44 slidably provided on the X-slider 43. The CCD camera 3 is attached to an end of the Z-slider 44 to extend vertically downward from the Z-slider 44.

In the above arrangement, after a workpiece is mounted on the table 2, the CCD camera 3 is moved in accordance with a target portion of the workpiece to image the workpiece by the CCD camera 3. Thus, the image data of the workpiece can be acquired. The image data is subjected to an image-analysis of a host computer (not shown) to measure the shape and dimension of the workpiece.

Incidentally, when an objective lens attached to the CCD camera 3 is exchanged in accordance with an object of the measurement or the shape of the workpiece, the attachment orientation of the objective lens varies slightly in accordance with the exchange process. Accordingly, a position calibration (coordinate calibration) of the CCD camera 3 is conducted (see, for instance, Document 1: JP-A-2001-165630).

The calibration method disclosed in the Document 1 uses a calibration device 101 as shown in Fig. 6. The calibration device 101 has a cylinder 110 having a central axis D. The cylinder 110 has an upper end surface 113 and a reference side surface 120.

During a calibration process, the calibration device 101 is initially fixed on the table 2 and the upper end surface 113 is imaged by the CCD camera 3 to obtain a Z-axis coordinate thereof, which is performed using an auto-focus mechanism of the CCD camera 3.

Subsequently, the profile of the reference side surface 120 is determined to acquire X-Y coordinates of the central axis D.

An attachment error due to an exchange of the CCD camera 3 is calculated based on a difference between the coordinates and a measurement result of a preceding calibration, which is used to calibrate the position of the CCD camera 3.

In a traditional image measuring instrument, the imaging direction of the CCD camera 3 has been fixed in the Z-axis direction. However, in order to widen the applicable range of such an imaging measuring instrument, it is desired that the CCD camera 3 is attached to the Z-slider 43 in a manner inclinable in, for instance, the Z-axis direction to change the orientation of the CCD camera 3.

However, such arrangement requires the position calibration not only when the CCD camera 3 is exchanged but also each time the imaging direction of the CCD camera 3 is changed, so that position calibration is impossible according to the method described in the Document 1.

### SUMMARY OF THE INVENTION

An object of the invention is to provide a calibration method capable of calibrating a position of an imaging unit even when the imaging direction of the imaging unit is changed.

A calibration method according to an aspect of the invention is for an image measuring instrument including: an imaging unit having an objective lens with a predetermined focus depth and a detector element that images a workpiece to output an image signal; an orientation changer that changes an imaging direction of the imaging unit; a movement unit for relatively moving the workpiece and the imaging unit; a focus adjuster that focuses the objective lens on the workpiece; and a position detector that outputs a measured position of the imaging unit as position information, the calibration method calibrating the position information when the imaging direction is changed, the calibration method including: a preparation step for preparing a reference gauge having a sphere sized to have a radius not more than the focus depth of the objective lens, a surface of the sphere defining a reference surface; an orientation-changing step for changing the imaging direction of the imaging unit; a focus-adjusting step for relatively moving the imaging unit relative to the reference gauge by the movement unit to focus the objective lens on the reference surface (14) by the focus adjuster; and a position-detecting step for detecting the position information of the imaging unit by the position detector.

Here, the objective lens refers to a lens that is located the closest to the workpiece.

The required function of the orientation changer is that the imaging direction of the imaging unit can be changed in at least two directions. Further, the required function of the movement unit is that the imaging unit and the workpiece can be relatively moved toward each other in at least two imaging directions.

An example of the focus adjuster is a device having an auto-focus mechanism on the imaging unit or the movement unit. Specifically, the focusing may be performed by relatively moving the imaging unit against the workpiece by the movement unit. Alternatively, the focus adjuster may be arranged so that, after the imaging unit is positioned at a predetermined position by the movement unit, the objective lens of the imaging unit is relatively moved against the workpiece.

According to the above arrangement, since the radius of the sphere is not more than the focus depth of the objective lens, both of the point on the reference surface closest to the objective lens and the portion defining the profile of the reference surface seen from the imaging unit come within the range of the focus depth of the objective lens, so that the objective lens can be securely focused on the reference surface during the focus-adjusting step. Further, the position information of the imaging unit can be detected during the position-detecting step. The error in the position information due to the change in the imaging direction is calculated based on the difference between the detected position information and the position information obtained through calibration before changing the orientation, thus allowing calibration of the position of the imaging unit.

Accordingly, when the imaging direction of the imaging unit is changed in a desired direction during the orientation-changing step, the position information of the imaging unit in the changed imaging direction can be calibrated.

Further, when the imaging unit is exchanged, the position information of the exchanged imaging unit can be calculated in the same manner as the above, and the attachment error due to the exchange can be calculated based on the difference between the calculated position information and the position information obtained during pre-replacement calibration, thus allowing calibration of the position of the imaging unit.

In the above aspect of the invention, it is preferable that the movement unit relatively moves the workpiece and the imaging unit in a three-dimensional direction.

The movement unit may be arranged so that the imaging unit can be moved in a direction of three axes orthogonal with each other. Alternatively, the movement unit may be adapted to move the imaging unit in a plane direction and a table on which the workpiece is mounted may be adapted to move in a direction orthogonal to the plane direction.

According to the above arrangement, since the imaging unit is relatively moved in the three-dimensional direction relative to the workpiece by the movement unit, an imageable range of the imaging unit can be enlarged as compared with an arrangement that allows relative movement of the imaging unit in one-dimensional (i.e. linear) or two-dimensional (i.e. planar) direction, thereby enlarging the measurement range.

In the above aspect of the invention, it is preferable that the orientation changer supports the imaging unit so that the imaging direction of the imaging unit is rotatable around a predetermined axis.

According to the above arrangement, since the imaging direction can be rotated around the predetermined axis by the orientation changer, it is not required to detach the imaging unit from the orientation changer and attach the imaging unit after changing the orientation thereof, thus easily changing the imaging direction.

Further, since the imaging direction can be changed in any directions around the predetermined axis, a target portion of the workpiece can be measured in any directions. Further, an automatic orientation change of the imaging direction can be more suitably conducted with a remote control.

### BRIEF DESCRIPTION OF THE DRAWINGS

Fig. 1 is a front elevational view of an image measuring instrument according to an embodiment of the invention.
Fig. 2 is a schematic illustration showing a positional relationship between an imaging unit of the image measuring instrument and a reference gauge.
Fig. 3 is an illustration showing an image taken by the imaging unit.
Fig. 4 is a schematic illustration for explaining a focus adjustment process of the reference gauge.

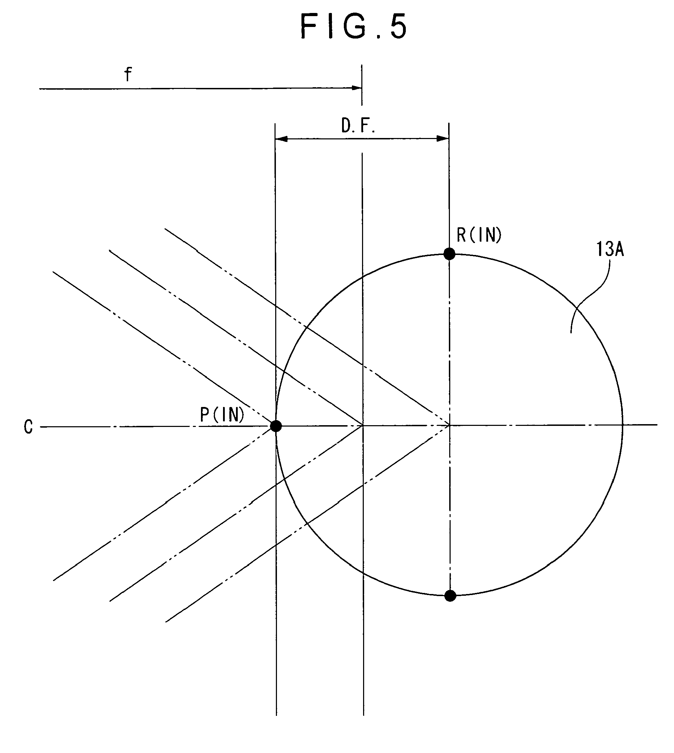

Fig. 5 is a schematic illustration showing a reference gauge according to a modification of the embodiment.
Fig. 6 is a front elevational view showing an image measuring instrument of a related art.

### DETAILED DESCRIPTION OF PREFERRED EMBODIMENT(S)

An embodiment of the present invention will be described below with reference to the attached drawings.

### Arrangement of Embodiment

An image measuring instrument of the present embodiment is basically the same as that explained in the Related Art section (Fig. 6), however, has distinctive features on the arrangement of attachment portion of the CCD camera 3.

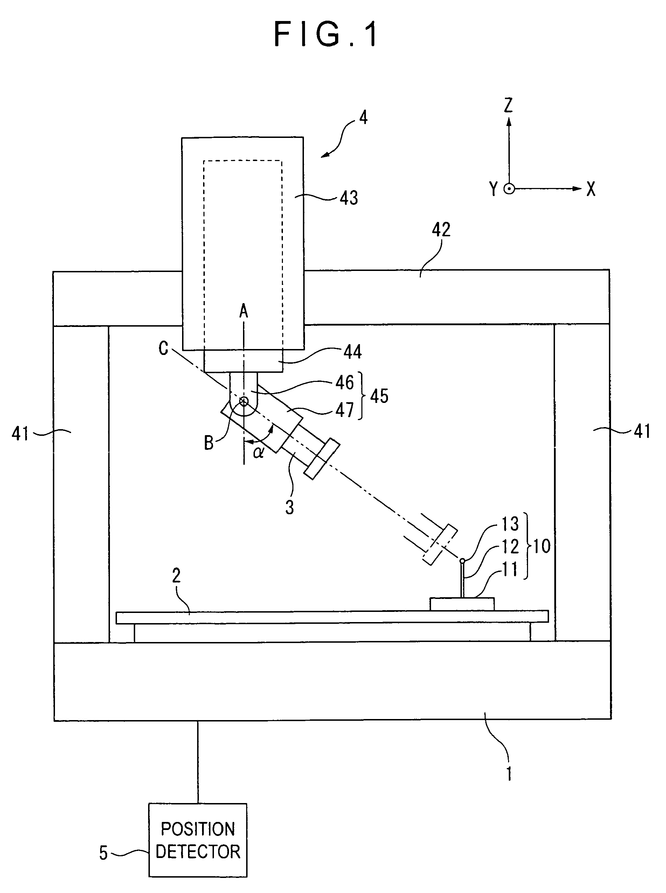

Fig. 1 is a front elevational view of the image measuring instrument according to the embodiment.

The image measuring instrument includes: a platform 1 as a base; a table 2 on which a workpiece is mounted, the table 2 being supported on the platform 1 in a manner movable in front and rear directions; a CCD camera 3 (non-contact probe) as an imaging unit for imaging the workpiece; a movement mechanism 4 for relatively moving the CCD camera 3 and the workpiece; and a position detector 5 for detecting the measurement position of the CCD camera 3 as positional information.

The arrangement of the movement mechanism 4 for moving the CCD camera 3 is the same as that described in the Related Art section. Accordingly, the same reference numerals will be attached to the same components to omit the detailed explanation thereof.

An orientation changer (probe head) 45 capable of changing the imaging direction of the CCD camera 3 in at least two directions is attached to the Z-slider 44 of the movement mechanism 4. The CCD camera 3 is attached to the orientation changer 45.

The orientation changer 45 includes a first rotating unit 46 rotatably supported to the Z-slider 44 around an axis A parallel to the Z-axis direction and a second rotating unit 47 rotatably supported to the first rotating unit 46 around an axis B orthogonal to the axis A. While the imaging direction is parallel to an axis C, which intersects the axis A at a predetermined degree α, the CCD camera 3 is attached to an end of the second rotating unit 47 and is capable of swinging relative to the Z-slider 44.

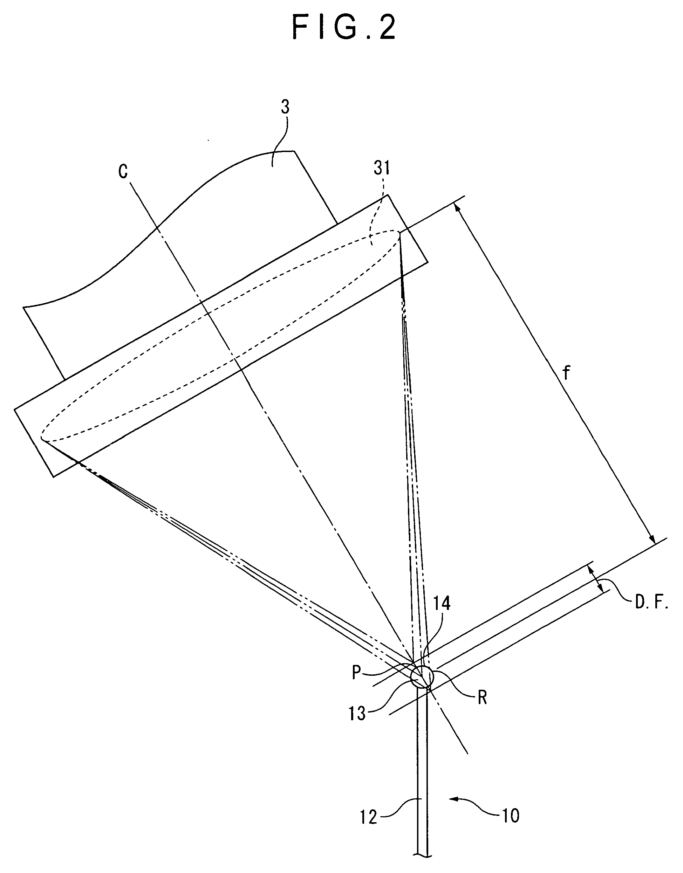

The CCD camera 3 incorporates an objective lens 31 (Fig. 2) having a predetermined focus distance F and a focus depth DF and a detector element (not shown) that images the workpiece through the objective lens 31 to output an image signal.

The image measuring instrument is provided with an auto-focus function (focus adjuster) for moving the table 2 and sliding the X-slider 43 and the Z-slider 44 to focus the objective lens 31 on the workpiece.

As shown in Fig. 1, a reference gauge (reference sphere) 10 according to the embodiment includes: a holder 11 for mounting and detachably fixing the reference gauge 10 on the table 2; a shank 12 erected on the holder 11; and a minute sphere 13 provided at an end of the shank 12.

Fig. 2 shows a positional relationship between the CCD camera 3 and the reference gauge 10 when the objective lens 31 is focused on the sphere 13.

As shown in Fig. 2, the sphere 13 has a radius not more than the focus depth DF of the objective lens 31. The surface of the sphere 13 is used as the reference surface 14 for calibrating the position of the CCD camera 3.

The radius of the sphere 13 is determined in accordance with a magnification of the objective lens 31. In other words, since the focus depth DF, which is unique to the objective lens 31, becomes small as the magnification of the objective lens 31 becomes large, when the focus depth DF of the objective lens 31 of 10 magnifications is 8 µm, the radius of the sphere 13 is set at 8 µm or less.

The diameter of the shank 12 is set smaller than the diameter of the sphere 13 at least at the connection with the sphere 13.

### Effect and Advantage of Embodiment

In order to calibrate the position information of the CCD camera 3 when the imaging direction of the CCD camera 3 is changed, the reference gauge 10 is initially fixed on the table 2 by an attachment screw and the like (preparation step S1). Next, the imaging direction of the CCD camera 3 is changed to a predetermined direction by the orientation changer 45 (orientation-changing step S2). Then, the table 2 and the movement mechanism 4 are relatively moved to move the CCD camera 3 toward the sphere 13. At this time, the table 2 and the movement mechanism 4 are relatively moved so that the sphere 13 is located in the imaging direction of the CCD camera 3. Subsequently, the CCD camera 3 is moved toward the sphere 13 along the imaging direction. Then, the objective lens 31 is brought into focus with the reference surface 14 using the auto-focus function by the table 2 and the movement mechanism 4 (focus adjusting step S3).

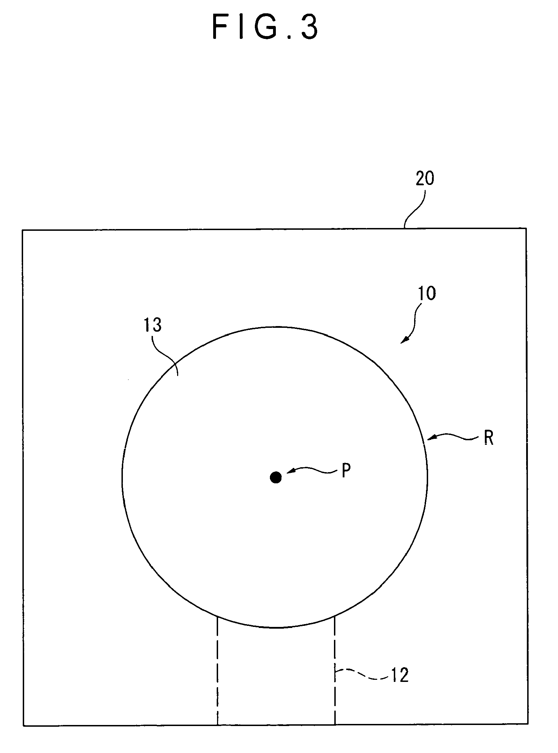

Fig. 3 shows an image 20 of the sphere 13 taken by the CCD camera 3 when the objective lens 31 is focused on the reference surface 14.

In this condition, as shown in Fig. 2, both of a point P on the reference surface 14 closest to the objective lens 31 and a portion R defining the profile of the reference surface 14 when seen from the CCD camera 3 are located within a range of the focus depth DF of the objective lens 31. Then, the position information of the CCD camera 3 is detected by the position detector (position-detecting step S4). Specifically, the position detector 5 detects respective position coordinates of the table 2, the X-slider 43 and the Z-slider 44 in the moving direction thereof, based on which the position information of the CCD camera 3 is calculated.

The errors in the position information due to the change in the imaging direction are calculated based on the difference between the detected position information and the position information obtained by calibration before changing the orientation, so that the position of the CCD camera 3 can be calibrated.

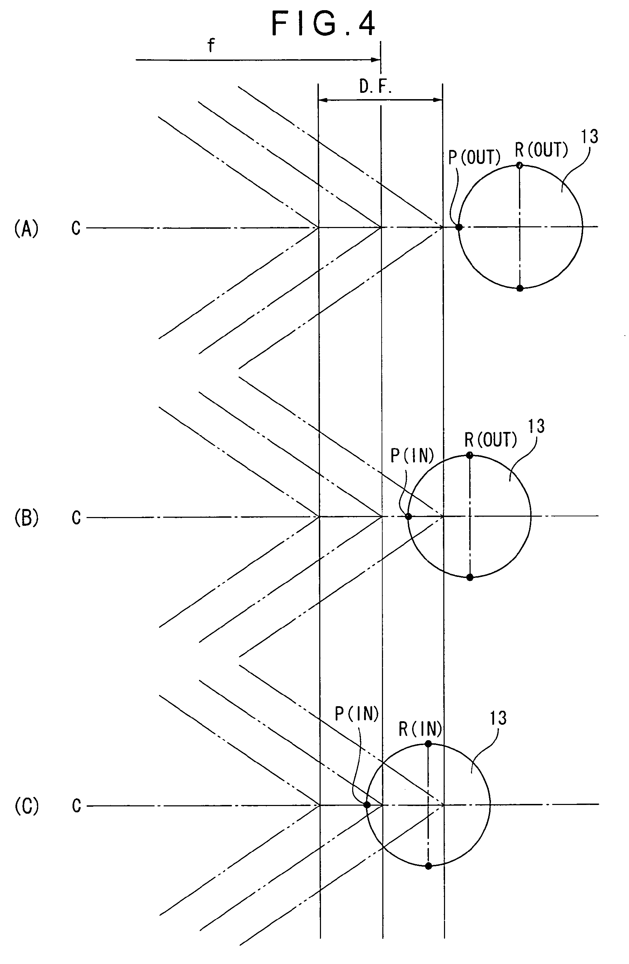

Fig. 4 shows a positional relationship between the CCD camera 3 and the sphere 13 when being auto-focused. The signs "IN" and "OUT" in the figure respectively represent focused and defocused conditions.

In the positional relationship shown in Fig. 4(A), both of the point P and the portion R of the sphere 13 are out of the range of the focus depth DF. In other words, the CCD camera 3 is out of focus. When the CCD camera 3 and the sphere 13 are relatively moved toward each other (the positional relationship shown in Fig. 4(B)), though the point P of the sphere 13 falls within the range of the focus depth DF, the portion R is still out of the range. When being further moved toward each other to be in the positional relationship shown in Fig. 4(C), both of the point P and the portion R of the sphere 13 fall within the range of the focus depth DF, so that the CCD camera 3 is focused.

As described above, since the radius of the reference gauge 10 is set not more than the focus depth DF of the objective lens 31, both of the point P and the portion R can simultaneously fall within the range of the focus depth DF of the objective lens 31, so that the focus of the objective lens 31 can be securely adjusted to the reference gauge 14.

Accordingly, irrespective of the imaging direction of the CCD camera 3, the position of the CCD camera 3 can be calibrated according to the method as described above.

Further, when the CCD camera 3 (non-contact probe) is rotated, considering the accuracy of the orientation adjuster 45 (rotating mechanism), a probe-end position can be more securely calibrated by measuring the same workpiece before and after the rotation than an estimation of the position of the probe-end by providing an encoder on the rotating mechanism. Accordingly, a so-called master ball, which is a sphere having an extremely high sphericity, is used to calibrate the probe-end position in a traditional touch probe. This is because the value of the sphere stays the same Irrespective of the directions in which the sphere is measured after rotating the probe.

However, because of measurement principle of an imaging probe such as the CCD camera 3 that detects an edge of a workpiece, it is difficult for such imaging probe to set focus on an object such as a sphere of which height gently varies and is impossible to determine an edge of a sphere. Accordingly, the master ball conventionally used for a touch probe could not be used for an imaging probe. In the present embodiment, since a reference gauge 10 having the sphere of which radius is smaller than the focus depth of the imaging probe is used to allow focusing on the reference gauge 10. the position of the CCD camera 3 can be calibrated by measuring the sphere 13.

After the CCD camera 3 is replaced for, for instance, repairing, or the objective lens 31 is exchanged in accordance with the measurement condition, the position information of the CCD camera 3 can be calculated according to the same method. Then, the attachment error due to the replacement/exchange is calculated based on the difference between the calculated position information and the position information calibrated before the replacement/exchange, so that the position of the CCD camera 3 can be calibrated.

### Modifications

The scope of the invention is not limited to the above-described embodiments, but includes modifications and improvements as long as an object of the invention can be attained.

For instance, it is only required that, for the reference gauge 10 of the embodiment, the radius of the sphere 13 is set not more than the focus depth DF. Accordingly, even when the focus depth DF is equal to the radius of the sphere 13A, the focusing is possible in principle and the position of the CCD camera 3 can be calibrated.

Further, in the calibration method of the embodiment, a calibration part program may be used for, for instance, a coordinates measuring machine capable of automatic measurement. Specifically, the CCD camera 3 is initially positioned so that an optical axis (axis C) of the objective lens 31 of the CCD camera 3 intersects the center of the sphere 13 of the reference gauge 10. Subsequently, the calibration part program is executed to automatically execute the respective calibration steps in sequence to complete an automatic calibration.

Though the table 2 on which the workpiece is mounted is moved and the CCD camera 3 is two-dimensionally moved for imaging the workpiece by the CCD camera 3 in the embodiment, it is only required that the workpiece and the CCD camera 3 are relatively moved. For instance, the CCD camera 3 may be three-dimensionally moved while the table 2 is fixed.

### Example

Examples of settings of the radii of the sphere 13 in accordance with the magnification of the objective lens 31 are shown below as an Example of the reference gauge 10 of the invention.

| Magnification of Objective Lens | Focus Depth (µm) | Sphere Dimension (µm) |
|---|---|---|
| 1 | 612 | 100 to 300 |
| 3 | 112 | 30 to 50 |
| 5 | 46 | 10 to 20 |
| 10 | 16 | 8 or less |

## Claims

1. A calibration method of an image measuring instrument including: an imaging unit (3) having an objective lens (31) with a predetermined focus depth (DF) and a detector element that images a workpiece to output an image signal; an orientation changer (45) that changes an imaging direction of the imaging unit (3); a movement unit (4) for relatively moving the workpiece and the imaging unit (3); a focus adjuster (4) that focuses the objective lens (31) on the workpiece; and a position detector (5) that outputs a measured position of the imaging unit (3) as position information, the calibration method calibrating the position information when the imaging direction is changed, the calibration method comprising:
a preparation step (S1) for preparing a reference gauge (10) having a sphere (13, 13A) sized to have a radius not more than the focus depth (DF) of the objective lens (31), a surface of the sphere (13, 13A) defining a reference surface (14);
an orientation-changing step (S2) for changing the imaging direction of the imaging unit (3);
a focus-adjusting step (S3) for relatively moving the imaging unit (3) relative to the reference gauge (10) by the movement unit (4) to focus the objective lens (31) on the reference surface (14) by the focus adjuster (4); and
a position-detecting step (S4) for detecting the position information of the imaging unit (3) by the position detector (5).

2. The calibration method according to claim 1, wherein
the movement unit (4) relatively moves the workpiece and the imaging unit (3) in a three-dimensional direction (X, Y, Z).

3. The calibration method according to claim 1 or 2, wherein
the orientation changer (45) supports the imaging unit (3) so that the imaging direction of the imaging unit (3) is rotatable around a predetermined axis (A, B).
